# FASCICULE DE BREVET EUROPEEN

(11) **EP 1 527 308 B1**
(45) Date de publication et mention de la délivrance du brevet: **09.09.2020**
(21) Numéro de dépôt: 03755643.8
(22) Date de dépôt: 28.07.2003
(51) Int. Cl.: F28D 1/04

(54) **ECHANGEUR DE CHALEUR POUR LE CIRCUIT D'AIR D'ADMISSION D'UN MOTEUR THERMIQUE**
WÄRMETAUSCHER FÜR DEN VERBRENNUNGSLUFTKREISLAUF EINES THERMISCHEN MOTORS
HEAT EXCHANGER FOR THE AIR INTAKE SYSTEM OF A HEAT ENGINE

(30) Priorité: 09.08.2002 FR 0210164
(43) Date de publication de la demande: 04.05.2005
(73) Titulaire: VALEO SYSTEMES THERMIQUES, 78320 Le Mesnil Saint-Denis (FR)
(72) Inventeur: POTIER, Michel, F-78120 Rambouillet (FR); MARTINS, Carlos, F-78150 Le Chesnay (FR)
(74) Mandataire: Neuviale, Bertrand
(86) Numéro de dépôt international: PCT/FR2003/002375
(87) Numéro de publication internationale: WO 2004/017006

(56) Documents cités:
- DE-A- 19 853 455
- US-A- 6 142 221
- PATENT ABSTRACTS OF JAPAN vol. 013, no. 299 (M-847), 11 juillet 1989 (1989-07-11) & JP 01 088099 A (HISAKA WORKS LTD), 3 avril 1989 (1989-04-03)
- PATENT ABSTRACTS OF JAPAN vol. 013, no. 257 (M-837), 14 juin 1989 (1989-06-14) & JP 01 058991 A (HISAKA WORKS LTD), 6 mars 1989 (1989-03-06)

## Description

L'invention se rapporte aux échangeurs de chaleur pour les véhicules automobiles. Un échangeur de chaleur selon le préambule de la revendication 1 est décrit dans document DE19853455.

Elle concerne plus particulièrement un échangeur de chaleur propre à être monté sur le circuit d'air d'admission d'un moteur thermique.

Les moteurs thermiques turbocompressés, en particulier les moteurs diesels, sont alimentés par un air sous pression, encore appelé "air de suralimentation", provenant d'un turbocompresseur actionné par les gaz d'échappement du moteur.

Comme l'air de suralimentation se trouve à une température élevée, il est souhaitable, pour un bon fonctionnement du moteur, de le refroidir avant son admission dans ce dernier.

Il est connu pour cela de refroidir l'air de suralimentation par un échangeur de chaleur particulier appelé refroidisseur d'air de suralimentation (en abrégé RAS). Ce refroidisseur a pour fonction de refroidir l'air de suralimentation par échange thermique avec de l'air en formant ainsi un échangeur du type air/air.

Il est connu aussi de placer, en sortie du turbocompresseur et en amont du refroidisseur air/air, un autre refroidisseur d'air de suralimentation, que l'on peut appeler aussi refroidisseur secondaire. Ce dernier est, quant à lui, refroidi par de l'eau en formant un échangeur du type air/eau. Il constitue ainsi un prérefroidisseur (encore appelé "precooler", terme anglo-saxon).

Par ailleurs, pour obtenir un meilleur rendement du moteur et diminuer la pollution, il est connu de recirculer une partie des gaz d'échappement vers l'admission du moteur, pour qu'ils soient brûlés plus complètement dans celui-ci.

Mais, comme ces gaz d'échappement sont à une température élevée, il est connu de les refroidir au moyen d'un autre échangeur alimenté aussi par l'eau de refroidissement du moteur.

De plus, ces moteurs thermiques turbocompressés sont habituellement équipés d'un piège à particules. Il est connu de réduire le bruit et de faciliter la régénération de ce piège à particules en réchauffant l'air d'admission grâce à un échangeur alimenté par l'eau de refroidissement du moteur. Cette fonction peut être réalisée par le refroidisseur d'air de suralimentation secondaire, encore appelé "precooler" (terme anglo-saxon) .

Ces échangeurs de chaleur, nécessaires au bon fonctionnement des moteurs turbocompressés, sont montés séparément, chacun des échangeurs possédant ses propres conduits de liquide et ses propres moyens de fixation.

Il en résulte une complexité dans les circuits du moteur, augmentant ainsi les coûts de fabrication et d'assemblage. Ces solutions connues augmentent aussi l'encombrement des accessoires et équipements présents dans le compartiment moteur.

L'invention a notamment pour but de surmonter les inconvénients précités.

Elle vise à procurer un échangeur de chaleur de construction simplifiée susceptible de réduire les coûts de fabrication et d'assemblage, ainsi que l'encombrement.

Elle propose à cet effet un échangeur de chaleur selon la revendication 1.

On réalise ainsi un échangeur qui regroupe deux parties, et donc deux fonctions, une première partie parcourue par l'air de suralimentation du moteur et une deuxième partie parcourue par un autre fluide primaire, lequel est avantageusement constitué par les gaz d'échappement du moteur. Les deux fluides primaires sont refroidis par le même fluide secondaire.

Il en résulte une réduction des coûts de fabrication et d'assemblage, ainsi qu'une simplification des circuits de fluide présents dans le compartiment moteur. Ce regroupement des fonctions permet aussi de diminuer l'encombrement des échangeurs de chaleur et autres accessoires présents dans le compartiment moteur.

La deuxième partie de l'échangeur de chaleur est avantageusement parcourue par les gaz d'échappement du moteur, ce qui permet de les refroidir avant de les recirculer vers l'admission du moteur.

Dans une forme de réalisation préférée de l'invention, les passages de circulation du fluide secondaire sont communs aux deux parties de l'échangeur et les traversent.

Selon l'invention, les passages de circulation du premier fluide primaire et les passages de circulation du deuxième fluide primaire sont séparés par une plaque de séparation placée entre la première partie et la deuxième partie du corps de l'échangeur.

Selon l'invention, les passages de circulation du premier fluide primaire comprennent une entrée et une sortie débouchant à une première extrémité du corps de l'échangeur, tandis que les passages de circulation du deuxième fluide primaire comprennent une entrée et une sortie débouchant à une deuxième extrémité du corps de l'échangeur.

De manière avantageuse, les passages de circulation du fluide secondaire comprennent des premiers passages dans la première partie et des deuxièmes passages dans la deuxième partie, ces premiers passages et deuxièmes passages étant reliés entre eux par des joints étanches. Ceci permet de découpler les premiers et les deuxièmes passages.

Selon l'invention, le corps de l'échangeur de chaleur est formé par un empilement de plaques conformées délimitant des lames de circulation pour un fluide primaire, alternant avec des lames de circulation pour le fluide secondaire, et des intercalaires disposés dans les lames de circulation des fluides primaires.

On réalise ainsi un échangeur du type à plaques dont le corps est divisé en une première partie parcourue par le premier fluide primaire et une deuxième partie parcourue par le deuxième fluide primaire.

Les joints étanches précités sont alors avantageusement intercalés entre deux plaques de fermeture du fluide primaire. Ces plaques de fermeture comportent avantageusement des points de fixation.

Dans une forme de réalisation préférée de l'invention, la plaque de séparation comporte un passage muni d'un clapet commandé par un actionneur et propre à être placé :
soit dans une position d'ouverture dans laquelle les passages de circulation du premier fluide primaire et les passages de circulation du deuxième fluide primaire communiquent, en sorte que le premier fluide primaire peut circuler dans la première partie et la deuxième partie de l'échangeur,
soit dans une position de fermeture dans laquelle les passages de circulation du premier fluide primaire et les passages de circulation du deuxième fluide primaire sont séparés, en sorte que le premier fluide primaire peut circuler dans la première partie et le deuxième fluide primaire dans la deuxième partie de l'échangeur.

Lorsque le clapet est dans la position d'ouverture, le premier fluide primaire, c'est-à-dire l'air de suralimentation du moteur, peut circuler dans le corps entier de l'échangeur de chaleur, ce qui facilite le refroidissement de l'air de suralimentation.

Selon une autre caractéristique de l'invention, l'échangeur de chaleur comporte une première vanne et une deuxième vanne pour réguler respectivement le débit du premier fluide primaire et le débit du deuxième fluide primaire. Ces deux vannes sont avantageusement prévues respectivement à deux extrémités de l'échangeur, de préférence sur deux plaques d'extrémité de celui-ci.

Selon encore une autre caractéristique de l'invention, la première partie et la deuxième partie de l'échangeur sont formées dans des matériaux de nature différente, en particulier dans des matériaux résistant à des gammes de températures différentes.

Ainsi, la première partie de l'échangeur peut être formée dans un matériau de moindre résistance, par exemple en aluminium, tandis que la deuxième partie de l'échangeur peut être formée dans un matériau de plus forte résistance, par exemple en acier inoxydable. Comme déjà indiqué, le deuxième fluide primaire est formé de préférence par un débit de recirculation des gaz d'échappement du moteur.

Toutefois, la deuxième partie de l'échangeur de chaleur, qui forme un échangeur auxiliaire, pourrait aussi être parcourue par un autre fluide.

Dans la description qui suit, faite seulement à titre d'exemple, on se réfère aux dessins annexés, sur lesquels :
- la Figure 1 est une vue schématique en coupe d'un échangeur de chaleur selon une première forme de réalisation de l'invention ;
- la Figure 2 est une vue schématique en coupe d'un échangeur de chaleur selon une deuxième forme de réalisation de l'invention ;
- la Figure 3 est une vue schématique en coupe d'un échangeur de chaleur selon une troisième forme de réalisation, comportant un clapet représenté en position de fermeture, la troisième forme de réalisation ne fait pas partie de l'invention;
- la Figure 4 est une vue analogue à la Figure 3, montrant le clapet en position d'ouverture ;
- la Figure 5 est une vue en perspective d'un autre échangeur de chaleur selon l'invention ;
- la Figure 6 est une vue en perspective éclatée de l'échangeur de chaleur de la Figure 5 ;
- la Figure 7 est une vue d'extrémité de l'échangeur de chaleur des Figures 5 et 6 ; et
- les Figures 8, 9 et 10 sont des vues en coupe prises respectivement suivant les lignes VIII-VIII, IX-IX et X-X de la Figure 7.

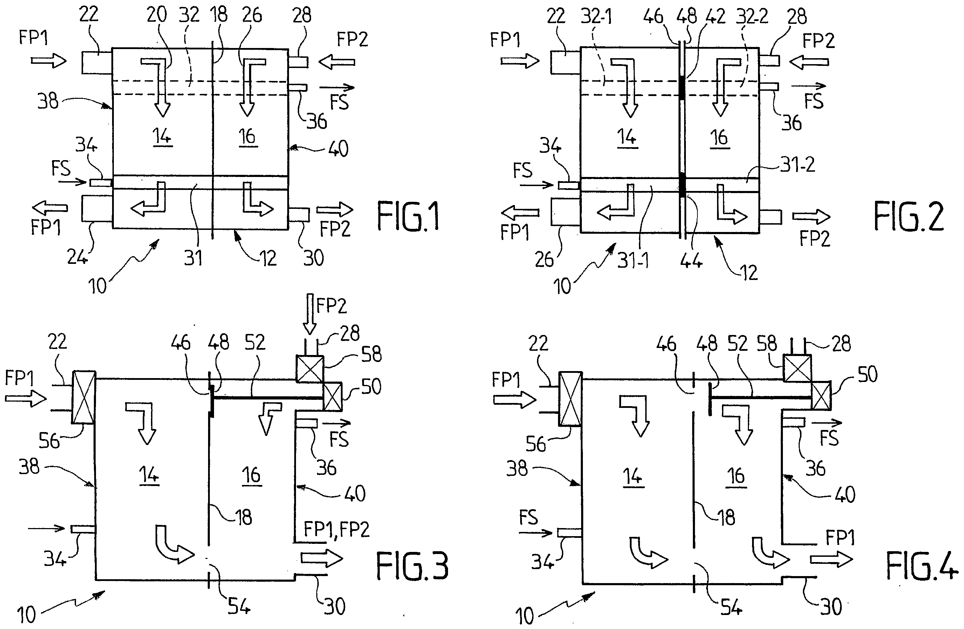

L'échangeur de chaleur 10 représenté à la Figure 1 est destiné à fonctionner en liaison avec un moteur thermique de véhicule automobile, en particulier un moteur diesel turbocompressé, fonctionnant avec de l'air de suralimentation.

L'échangeur de chaleur 10 comprend un corps 12 divisé en une première partie 14 et en une deuxième partie 16, ces deux parties étant séparées par une plaque de séparation 18.

Le corps 12 comprend des passages de circulation (non représentés en détail) pour un premier fluide primaire FP1 qui est l'air de suralimentation du moteur. Ces passages de circulation (représentés schématiquement par les flèches 20) comprennent une entrée 22 et une sortie 24 pour le premier fluide primaire FP1, qui sont situées à une même extrémité du corps 12 de l'échangeur de chaleur.

La deuxième partie 16 comprend des passages de circulation (non représentés en détail) pour un deuxième fluide primaire FP2 qui, dans l'exemple, est constitué par les gaz d'échappement du moteur. Ces passages de circulation (représentés schématiquement par les flèches 26) comprennent une entrée 28 et une sortie 30 pour le deuxième fluide primaire FP2, qui sont situées à une autre extrémité du corps 12. Ainsi, l'entrée 22 et la sortie 24 sont situées d'un côté de la cloison 18, tandis que l'entrée 28 et la sortie 30 sont placées de l'autre côté de cette cloison 18.

Le fluide FP1 parcourant la première partie 14 et le fluide FP2 parcourant la deuxième partie 16 sont refroidis par un même fluide, à savoir un fluide secondaire FS circulant dans des passages de circulation 31 et 32 qui sont communs aux parties 14 et 16 et qui les traversent de part en part. Dans l'exemple de réalisation, le fluide secondaire FS est un liquide de refroidissement, typiquement le liquide de refroidissement du moteur du véhicule. Le fluide secondaire FS pénètre dans le passage 31 par une tubulure d'entrée 34 et quitte le passage 32 par une tubulure de sortie 36. Dans l'exemple, les tubulures 34 et 36 sont disposées respectivement aux deux extrémités de l'échangeur de chaleur. Elles pourraient cependant, en variante, être disposée à une même extrémité de l'échangeur de chaleur.

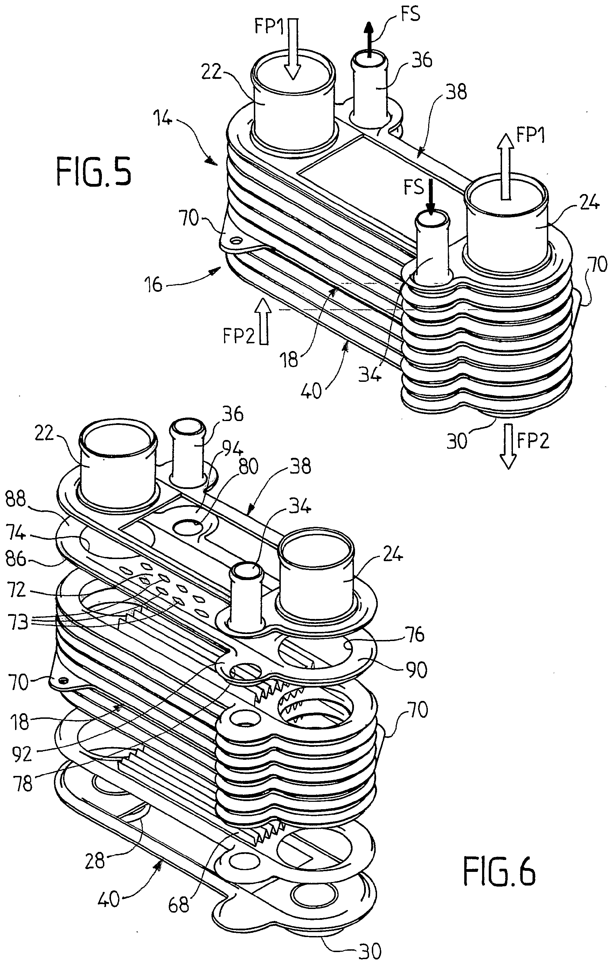

Comme on le verra plus loin en référence aux Figures 5 à 10, le corps de l'échangeur de chaleur est avantageusement réalisé par un empilement de plaques définissant des lames de circulation alternées.

En pareil cas, l'entrée 22 et la sortie 24 du fluide FP1 sont avantageusement prévues sur une plaque d'extrémité 38, tandis que l'entrée 28 et la sortie 30 du fluide primaire FP2sont avantageusement prévues sur une autre plaque d'extrémité 40 du corps 12 de l'échangeur. Dans l'exemple l'entrée 34 du fluide FS et la sortie 36 du fluide secondaire sont disposées respectivement sur les plaques d'extrémité 38 et 40.

On regroupe ainsi, dans un même corps d'échangeur de chaleur, une première partie 14 pour le refroidissement de l'air de suralimentation et une deuxième partie 16 pour le refroidissement des gaz d'échappement recirculés. Dans tous les cas, les deux fluides primaires sont refroidis par un même fluide secondaire FS, ce qui permet de simplifier la construction de l'échangeur, donc de réduire ses coûts de fabrication et d'assemblage, et aussi l'encombrement global.

Dans la forme de réalisation de la Figure 2, qui représente un autre échangeur de chaleur s'apparentant à celui de la Figure 1, les parties 14 et 16 sont découplées, et il est ainsi possible de les réaliser différemment. En particulier, il est avantageux que la première partie 14 et la deuxième partie 16 soient formées dans des matériaux de nature différente, par exemple dans des matériaux résistant à des gammes de températures différentes.

Dans l'exemple considéré, l'air de suralimentation parcourant la partie 14 se trouve dans une gamme de températures inférieure à celle des gaz d'échappement parcourant la partie 16. De ce fait, la partie 14 peut être réalisée dans un matériau de moindre résistance thermique, par exemple en aluminium, tandis que la deuxième partie 16 peut être réalisée dans un matériau de plus forte résistance thermique, par exemple en acier inoxydable.

Le passage 31 comprend un premier passage 31-1 dans la première partie 14 et un deuxième passage 31-2 dans la deuxième partie 16. De façon correspondante, le passage 32 comprend un premier passage 32-1 dans la première partie 14 et un deuxième passage 32-2 dans la deuxième partie 16.

Les premiers passages 31-1 et 32-1 sont reliés respectivement aux deuxièmes passages 31-2 et 32-2 par des joints étanches 42 et 44, ce qui permet de découpler les passages de circulation de la première partie de ceux de la deuxième partie.

Lorsque le corps 12 est formé par un empilement de plaques conformées, comme déjà indiqué, les joints étanches 42 et 44 sont avantageusement intercalés entre deux plaques 46 et 48 disposées en vis-à-vis et espacées l'une de l'autre. Ces plaques 46 et 48 sont qualifiées de plaques de fermeture dans la mesure où elles ferment respectivement la circulation du premier fluide primaire FP1 dans la partie 14 et celle du fluide FP2 dans la partie 16. Ces plaques de fermeture 46 et 48 jouent la fonction de séparation de la plaque de séparation 18 de la Figure 1.

La standardisation de l'échangeur de la Figure 2 permet de mieux découpler les parties 14 et 16. Cette solution trouve un intérêt tout particulier dans le cas où ces deux parties sont formées dans des matériaux différents l'un de l'autre, comme déjà indiqué.

On se réfère maintenant aux Figures 3 et 4 qui constituent une variante de la forme de réalisation de la Figure 1. Dans cette forme de réalisation, la plaque de séparation 18 comporte un passage 46 muni d'un clapet 48 commandé par un actionneur 50 par l'intermédiaire d'une tige 52 traversant la partie 16. L'actionneur 50 peut être constitué, par exemple, par un vérin, un moteur électrique, un micromoteur, etc. La plaque de séparation 18 est en outre munie d'une ouverture 54 faisant communiquer les parties 14 et 16.

Le clapet 48 peut être placé soit dans une position d'ouverture (Figure 4), soit dans une position de fermeture (Figure 3). Dans la position d'ouverture, les passages de circulation du premier fluide primaire FP1 et les passages de circulation du deuxième fluide primaire FP2 communiquent entre eux, si bien que le fluide primaire FP1 peut circuler dans la première partie et la deuxième partie de l'échangeur, comme montré par les flèches. Ceci permet d'augmenter la capacité de refroidissement pour le fluide primaire FP1, le corps de l'échangeur n'étant alors parcouru que par le fluide primaire FP1.

Dans la position de fermeture (Figure 3), les passages de circulation du premier fluide primaire FP1 et les passages de circulation du deuxième fluide primaire FP2 sont séparés, si bien que le premier fluide primaire FP1 peut circuler dans la première partie 14 et le deuxième fluide primaire FP2 dans la deuxième partie 16 de l'échangeur. Par ailleurs, dans la forme de réalisation des Figures 3 et 4, l'échangeur comporte une première vanne 56 montée sur l'entrée 22 et une deuxième vanne 58 montée sur l'entrée 28, ce qui permet de réguler respectivement le débit du premier fluide primaire FP1 et le débit du deuxième fluide primaire FP2. Ces deux vannes sont prévues respectivement aux deux extrémités de l'échangeur, c'est-à-dire aux deux extrémités du corps 12.

La vanne 56 se trouve ainsi avantageusement placée sur la plaque d'extrémité 38 et la vanne 58 sur la plaque d'extrémité 40.

On se réfère maintenant aux Figures 5 à 10 pour décrire une forme de réalisation particulière de l'invention, qui s'apparente à celle de la Figure 1.

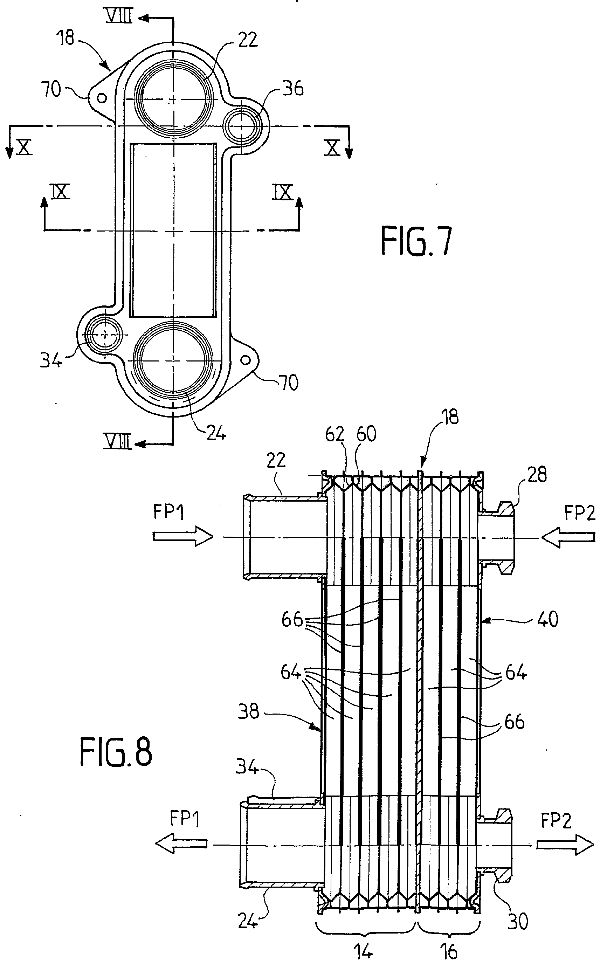

Le corps 12 de l'échangeur est formé par un empilement de plaques conformées, à savoir des plaques 60 et 62 disposées par paires et de façon alternée. Les plaques 60 et 62 d'une même paire délimitent entre elles une lame de circulation 64 pour un fluide primaire, à savoir pour le fluide FP1 dans la partie 14 et pour le fluide FP2 dans la partie 16 (voir en particulier la Figure 8). Par ailleurs, entre une plaque 62 d'une paire et une plaque 60 d'une paire adjacente, est délimitée, à chaque fois, une lame 66 pour la circulation du fluide secondaire FS, c'est-à-dire le liquide refroidissement.

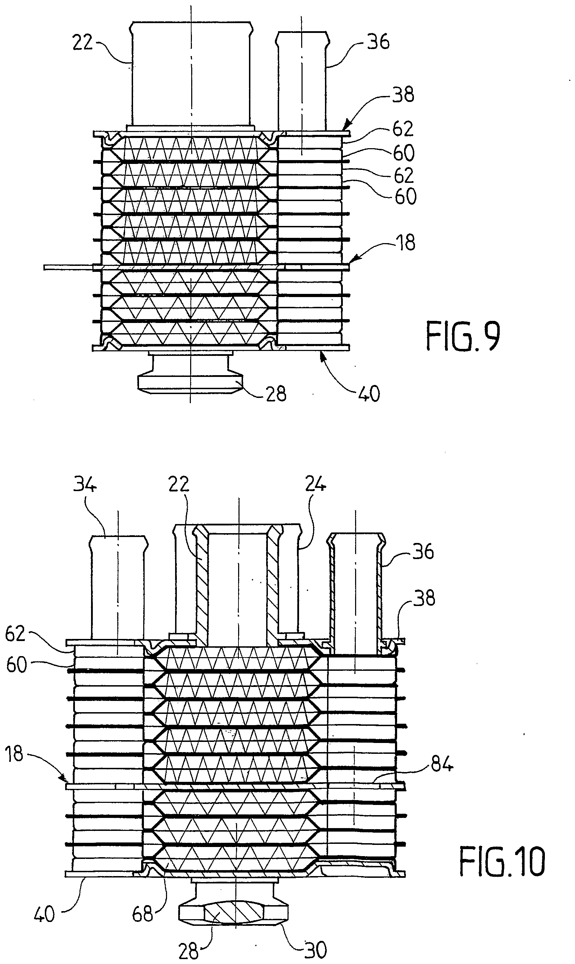

En outre, des intercalaires 68 sont disposés dans les lames de circulation 64 des fluides primaires FP1 et FP2, comme on le voit aux Figures 9 et 10. Ces intercalaires sont avantageusement formés par des feuilles métalliques ondulées et ils ont pour fonction d'augmenter la surface d'échange dans les lames 64 parcourues par les fluides primaires FP1 et FP2 qui sont tous deux des gaz. Par ailleurs, les lames 66 parcourues par le fluide secondaire FS, qui est un liquide, sont avantageusement pourvues de bossettes 73 qui ont pour rôle de provoquer un écoulement turbulent. Dans le cas où, comme déjà indiqué, les parties 14 et 16 du corps 12 sont dans des matériaux différents, les intercalaires 68 de la première partie 14 et les intercalaires 68 de la deuxième partie 16 sont également formés dans des matériaux différents.

Comme on le voit sur les Figures 5, 6 et 7, la plaque de séparation 18 comprend deux pattes de fixation 70 en forme d'oreille, faisant saillie à l'extérieur de la plaque. La plaque de séparation 18 est insérée au montage entre les plaques 60 et 62 de la partie 14 et les plaques 60 et 62 de la partie 16.

L'empilement des plaques 60 et 62 est encadré par deux plaques d'extrémité 38 et 40 qui constituent des moyens de renforcement. La plaque 38 reçoit la tubulure d'entrée 22 et la tubulure de sortie 24 du fluide FP1, tandis que la plaque 40 reçoit la tubulure d'entrée 28 et la tubulure de sortie 30 du fluide FP2. De plus la plaque 38 reçoit aussi, dans cet exemple de réalisation, la tubulure d'entrée 34 et la tubulure de sortie 36 du fluide secondaire FS.

Les plaques courantes 60 et 62 sont généralement identiques mais disposée de façon alternée pour définir les lames de circulation précitées. On décrira maintenant la structure d'une lame 60, étant entendu que cette description s'applique aussi à une lame 62.

La lame 60 est de forme générale oblongue et elle comprend un fond plat 72 muni de bossettes, aux extrémités duquel sont aménagées deux ouvertures 74 et 76 de forme circulaire. Les ouvertures 74 et les ouvertures 76 sont alignées respectivement avec la tubulure d'entrée 22 et la tubulure de sortie 24 pour permettre la circulation du fluide FP1 dans les lames 64 de la partie 14 (voir en particulier la Figure 8). De même, les ouvertures 74 et les ouvertures 76 sont alignées respectivement avec la tubulure de sortie 30 et la tubulure d'entrée 28 pour permettre la circulation du fluide FP2 dans les lames 64 de la partie 16 (voir en particulier la Figure 8).

Chaque lame 60 comporte aussi deux autres ouvertures 78 et 80, également de forme circulaire, mais de plus petit diamètre que les ouvertures 74 et 76, et disposées proches de ces dernières. Dans l'empilement les ouvertures 78 et 80 viennent respectivement dans l'alignement de la tubulure d'entrée 34 et de la tubulure de sortie 36 pour permettre la circulation du fluide FS dans les lames 66 aussi bien dans la partie 14 que dans la partie 16. Pour cela, la plaque de séparation comporte deux ouvertures de passage 82 et 84 disposées respectivement dans l'alignement des ouvertures 78 et 80. L'ouverture 84 est visible sur la Figure 10.

Pour définir les lames de circulation de fluide, les plaques 60 sont creuses et entourées chacune d'un rebord périphérique 86 rehaussé par rapport au fond 72 et propre à être réuni de façon étanche avec le rebord périphérique homologue d'une plaque adjacente. Chaque plaque 60 est avantageusement réalisée par emboutissage et découpe d'une tôle métallique. Elle comporte de des cuvettes 88, 90, 92 et 94 entourant respectivement les ouvertures 74, 76, 82 et 84 (Figure 6). Comme on le voit en particulier sur la Figure 6, les intercalaires 68 disposés dans les lames 66 ont des ondulations définies par des génératrices qui s'étendent dans la direction longitudinale des plaques pour ne pas freiner l'écoulement des fluides primaires FP1 et FP2.

L'ensemble de l'échangeur est avantageusement réalisé par brasage en une seule opération.

Dans la forme de réalisation préférée de l'invention, les parties 14 et 16 sont parcourues respectivement par l'air de suralimentation et les gaz d'échappement recirculés, tandis que ces deux fluides primaires sont refroidis par le liquide de refroidissement du moteur. La partie 16 du corps 12, qui forme un échangeur auxiliaire, pourrait en variante être parcourue par un fluide d'une autre nature.

L'invention est applicable notamment aux véhicules automobiles.

## Revendications

1. Echangeur de chaleur propre à être monté sur le circuit d'air d'admission d'un moteur thermique, **caractérisé en ce qu'**il comprend un seul corps (12) divisé en une première partie (14) ayant des passages de circulation (20) pour un premier fluide primaire (FP1) qui est l'air de suralimentation du moteur et en une deuxième partie (16) ayant des passages de circulation (26) pour un deuxième fluide primaire (FP2), par exemple les gaz d'échappement du moteur, le corps comprenant en outre des passages de circulation (31, 32) pour un fluide secondaire (FS), par exemple un fluide de refroidissement, commun aux deux parties de l'échangeur, lesdits passages de circulation (20) du premier fluide primaire (FP1) et lesdits passages de circulation (26) du deuxième fluide primaire (FP2) étant séparés par une plaque de séparation (18) placée entre la première partie (12) et la deuxième partie (14) du corps de l'échangeur, **caractérisé en ce que** le corps (12) est formé par un empilement de plaques conformées (60, 62) délimitant des lames de circulation (64) pour un premier fluide primaire (FP1; FP2) alternant avec des lames de circulation (66) pour le fluide secondaire (FS) et des intercalaires (68) disposés dans les lames de circulation des fluides primaires (FP1; FP2), et **en ce que** lesdits passages de circulation (26) comprennent une entrée (22) et une sortie (24) du premier fluide primaire (FP1) situées à une même extrémité du corps (12), et une entrée (28) et une sortie (30) du deuxième fluide primaire (FP2) situées à une autre extrémité du corps (12), lesdites entrée (22) et sortie (24) du premier fluide primaire (FP1) étant situées d'un côté de la plaque de séparation (18) alors que lesdites entrée (28) et sortie (30) du deuxième fluide primaire (FP2) sont placées de l'autre côté de la plaque de séparation (18).

2. Echangeur de chaleur selon la revendication 1, **caractérisé en ce que** les passages de circulation (31, 32) du fluide secondaire (FS) sont communs aux deux parties (14, 16) de l'échangeur et les traversent.

3. Echangeur de chaleur selon l'une des revendications 1 à **caractérisé en ce que** les passages de circulation du fluide secondaire (FS) comprennent des premiers passages (31-1, 32-1) dans la première partie (14) et des deuxièmes passages (31-2, 32-2) dans la deuxième partie (16), ces premiers passages et deuxièmes passages étant reliés entre eux par des joints étanches (42, 44).

4. Echangeur de chaleur selon la revendication 3, **caractérisé en ce que** les joints étanches (42, 44) sont intercalés entre deux plaques de fermeture (46, 48) du fluide primaire.

5. Echangeur de chaleur selon l'une des revendications 1 à 4, **caractérisé en ce que** les plaques de fermeture (46, 48) comportent des moyens de fixation (70).

6. Echangeur de chaleur selon l'une des revendications 1 à 2, **caractérisé en ce que** la plaque de séparation (18) comporte un passage (46) muni d'un clapet (48) commandé par un actionneur (50) et propre à être placé: soit dans une position d'ouverture dans laquelle les passages de circulation du premier fluide primaire (FP1) et les passages de circulation du deuxième fluide primaire (FP2) communiquent, en sorte que le premier fluide primaire (FP1) peut circuler dans la première partie (14) et la deuxième partie (16) de l'échangeur, soit dans une position de fermeture dans laquelle les passages de circulation du premier fluide primaire (FP1) et les passages de circulation du deuxième fluide primaire (FP2) sont séparés, en sorte que le premier fluide primaire (FP1) peut circuler dans la première partie (14) et le deuxième fluide primaire (FP2) dans la deuxième partie (16) de l'échangeur.

7. Echangeur de chaleur selon l'une des revendications 1 à 6, **caractérisé en ce qu'**il comporte une première vanne (56) et une deuxième vanne (58) pour réguler respectivement le débit du premier fluide primaire (FP1) et le débit du deuxième fluide primaire (FP2).

8. Echangeur de chaleur selon la revendication 7, **caractérisé en ce que** la première vanne (56) et la deuxième vanne (58) sont prévues respectivement à deux extrémités de l'échangeur.

9. Echangeur de chaleur selon la revendication 8, **caractérisé en ce que** la première vanne (56) et la deuxième vanne (58) sont prévues respectivement sur deux plaques d'extrémité (38, 40) de l'échangeur.

10. Echangeur de chaleur selon l'une des revendications 1 à 9, **caractérisé en ce que** la première partie (14) et la deuxième partie (16) de l'échangeur sont formées dans des matériaux de nature différente, en particulier dans des matériaux résistant à des gammes de températures différentes.

11. Echangeur de chaleur selon la revendication 10, **caractérisé en ce que** la première partie (14) de l'échangeur est formée dans un matériau de moindre résistance, par exemple en aluminium, tandis que la deuxième partie (16) de l'échangeur est formée dans un matériau de plus forte résistance, par exemple en acier inoxydable.

## Patentansprüche

1. Wärmetauscher, welcher dafür eingerichtet ist, im Ansaugluftkreislauf eines Verbrennungsmotors angebracht zu werden, **dadurch gekennzeichnet, dass** er einen einzigen Körper (12) umfasst, der in einen ersten Teil (14) mit Strömungsdurchgängen (20) für ein erstes Primärfluid (FP1), welches die Ladeluft des Motors ist, und einen zweiten Teil (16) mit Strömungsdurchgängen (26) für ein zweites Primärfluid (FP2), zum Beispiel die Abgase des Motors, aufgeteilt ist, wobei der Körper außerdem Strömungsdurchgänge (31, 32) für ein Sekundärfluid (FS), zum Beispiel ein Kühlfluid, das den zwei Teilen des Wärmetauschers gemeinsam ist, umfasst, wobei die Strömungsdurchgänge (20) des ersten Primärfluids (FP1) und die Strömungsdurchgänge (26) des zweiten Primärfluids (FP2) durch eine Trennplatte (18) getrennt sind, die zwischen dem ersten Teil (12) und dem zweiten Teil (14) des Körpers des Wärmetauschers angeordnet ist,
**dadurch gekennzeichnet, dass** der Körper (12) von einem Stapel von geformten Platten (60, 62) gebildet wird, die Strömungslamellen (64) für ein erstes Primärfluid (FP1; FP2), die sich mit Strömungslamellen (66) für das Sekundärfluid (FS) abwechseln, und Einlagen (68), die in den Strömungslamellen der Primärfluide (FP1; FP2) angeordnet sind, begrenzen, und dadurch, dass die Strömungsdurchgänge (26) einen Einlass (22) und einen Auslass (24) für das erste Primärfluid (FP1), die sich an ein und demselben Ende des Körpers (12) befinden, und einen Einlass (28) und einen Auslass (30) für das zweite Primärfluid (FP2), die sich an einem anderen Ende des Körpers (12) befinden, umfassen, wobei sich der Einlass (22) und der Auslass (24) für das erste Primärfluid (FP1) auf einer Seite der Trennplatte (18) befinden, während der Einlass (28) und der Auslass (30) für das zweite Primärfluid (FP2) auf der anderen Seite der Trennplatte (18) angeordnet sind.

2. Wärmetauscher nach Anspruch 1, **dadurch gekennzeichnet, dass** die Strömungsdurchgänge (31, 32) des Sekundärfluids (FS) den zwei Teilen (14, 16) des Wärmetauschers gemeinsam sind und sie durchqueren.

3. Wärmetauscher nach einem der Ansprüche 1 bis 2, **dadurch gekennzeichnet, dass** die Strömungsdurchgänge des Sekundärfluids (FS) erste Durchgänge (31-1, 32-1) im ersten Teil (14) und zweite Durchgänge (31-2, 32-2) im zweiten Teil (16) umfassen, wobei diese ersten Durchgänge und zweiten Durchgänge durch Dichtungen (42, 44) miteinander verbunden sind.

4. Wärmetauscher nach Anspruch 3, **dadurch gekennzeichnet, dass** die Dichtungen (42, 44) zwischen zwei Abdeckplatten (46, 48) des Primärfluids angeordnet sind.

5. Wärmetauscher nach einem der Ansprüche 1 bis 4, **dadurch gekennzeichnet, dass** die Abdeckplatten (46, 48) Befestigungsmittel (70) aufweisen.

6. Wärmetauscher nach einem der Ansprüche 1 bis 2, **dadurch gekennzeichnet, dass** die Trennplatte (18) einen Durchgang (46) aufweist, der mit einer Ventilklappe (48) versehen ist, die von einem Stellantrieb (50) gesteuert wird und dafür eingerichtet ist, gebracht zu werden: entweder in eine Öffnungsposition, in welcher die Strömungsdurchgänge des ersten Primärfluids (FP1) und die Strömungsdurchgänge des zweiten Primärfluids (FP2) in Verbindung stehen, so dass das erste Primärfluid (FP1) im ersten Teil (14) und zweiten Teil (16) des Wärmetauschers zirkulieren kann, oder in eine Schließposition, in welcher die Strömungsdurchgänge des ersten Primärfluids (FP1) und die Strömungsdurchgänge des zweiten Primärfluids (FP2) getrennt sind, so dass das erste Primärfluid (FP1) im ersten Teil (14) und das zweite Primärfluid (FP2) im zweiten Teil (16) des Wärmetauschers zirkulieren kann.

7. Wärmetauscher nach einem der Ansprüche 1 bis 6, **dadurch gekennzeichnet, dass** er ein erstes Ventil (56) und ein zweites Ventil (58) aufweist, um die Durchflussmenge des ersten Primärfluids (FP1) bzw. die Durchflussmenge des zweiten Primärfluids (FP2) zu regeln.

8. Wärmetauscher nach Anspruch 7, **dadurch gekennzeichnet, dass** das erste Ventil (56) und das zweite Ventil (58) jeweils an einem von zwei Enden des Wärmetauschers vorgesehen sind.

9. Wärmetauscher nach Anspruch 8, **dadurch gekennzeichnet, dass** das erste Ventil (56) und das zweite Ventil (58) jeweils auf einer von zwei Endplatten (38, 40) des Wärmetauschers vorgesehen sind.

10. Wärmetauscher nach einem der Ansprüche 1 bis 9, **dadurch gekennzeichnet, dass** der erste Teil (14) und der zweite Teil (16) des Wärmetauschers aus Materialien unterschiedlicher Art ausgebildet sind, insbesondere aus Materialien, die in Bezug auf unterschiedliche Temperaturbereiche temperaturbeständig sind.

11. Wärmetauscher nach Anspruch 10, **dadurch gekennzeichnet, dass** der erste Teil (14) des Wärmetauschers aus einem Material geringerer Beständigkeit ausgebildet ist, zum Beispiel aus Aluminium, während der zweite Teil (16) des Wärmetauschers aus einem Material höherer Beständigkeit ausgebildet ist, zum Beispiel aus Edelstahl.

## Claims

1. Heat exchanger able to be mounted on the air intake circuit of a combustion engine, **characterized in that** it comprises a single body (12) divided into a first part (14) having circulation passages (20) for a first primary fluid (FP1) which is the supercharged charge air for the engine and into a second part (16) having circulation passages (26) for a second primary fluid (FP2), for example engine exhaust gases, the body further comprising circulation passages (31, 32) for a secondary fluid (FS), for example a coolant, common to the two parts of the exchanger, the said circulation passages (20) for the first primary fluid (FP1) and the said circulation passages (26) for the second primary fluid (FP2) being separated by a separation plate (18) positioned between the first part (12) and the second part (14) of the body of the exchanger, **characterized in that** the body (12) is formed of a stack of shaped plates (60, 62) delimiting circulation layers (64) for a first primary fluid (FP1; FP2) alternating with circulation layers (66) for the secondary fluid (FS) and inserts (68) positioned in the circulation layers for the primary fluids (FP1; FP2), and **in that** the said circulation passages (26) comprise an inlet (22) and an outlet (24) for the first primary fluid (FP1), these being situated at one same end of the body (12), and an inlet (28) and an outlet (30) for the second primary fluid (FP2), these being situated at another end of the body (12), the said inlet (22) and outlet (24) for the first primary fluid (FP1) being situated on one side of the separation plate (18) while the said inlet (28) and outlet (30) for the second primary fluid (FP2) are positioned on the other side of the separation plate (18).

2. Heat exchanger according to Claim 1, **characterized in that** the circulation passages (31, 32) for the secondary fluid (FS) are common to the two parts (14, 16) of the exchanger and pass through same.

3. Heat exchanger according to one of Claims 1 and 2, **characterized in that** the circulation passages for the secondary fluid (FS) comprise first passages (31-1, 32-1) in the first part (14) and second passages (31-2, 32-2) in the second part (16), these first passages and second passages being connected to one another by sealed joints (42, 44) .

4. Heat exchanger according to Claim 3, **characterized in that** the sealed joints (42, 44) are interposed between two closure plates (46, 48) for the primary fluid.

5. Heat exchanger according to one of Claims 1 to 4, **characterized in that** the closure plates (46, 48) comprise fixing means (70).

6. Heat exchanger according to one of Claims 1 and 2, **characterized in that** the separation plate (18) comprises a passage (46) equipped with a valve shutter (48) controlled by an actuator (50) and able to be positioned: either in an open position in which the circulation passages for the first primary fluid (FP1) and the circulation passages for the second primary fluid (FP2) communicate, so that the first primary fluid (FP1) can circulate in the first part (14) and the second part (16) of the exchanger, or in a closed position in which the circulation passages for the first primary fluid (FP1) and the circulation passages for the second primary fluid (FP2) are separated, so that the first primary fluid (FP1) can circulate in the first part (14) and the second primary fluid (FP2) in the second part (16) of the exchanger.

7. Heat exchanger according to one of Claims 1 to 6, **characterized in that** it comprises a first valve (56) and a second valve (58) to respectively regulate the flow rate of the first primary fluid (FP1) and the flow rate of the second primary fluid (FP2).

8. Heat exchanger according to Claim 7, **characterized in that** the first valve (56) and the second valve (58) are provided at two ends of the exchanger respectively.

9. Heat exchanger according to Claim 8, **characterized in that** the first valve (56) and the second valve (58) are respectively provided on two end plates (38, 40) of the exchanger.

10. Heat exchanger according to one of Claims 1 to 9, **characterized in that** the first part (14) and the second part (16) of the exchanger are formed from materials of different natures, particularly from materials able to withstand different ranges of temperatures.

11. Heat exchanger according to Claim 10, **characterized in that** the first part (14) of the exchanger is formed from a material with lower resistance, for example aluminium, while the second part (16) of the exchanger is formed from a material with higher resistance, for example stainless steel.
